# EUROPEAN PATENT APPLICATION

(11) **EP 4 779 466 A1**
(43) Date of publication of application: **22.07.2026**
(21) Application number: 25829400.8
(22) Date of filing: 09.04.2025
(51) Int. Cl.: G06F 9/451

(54) **FROZEN SCREEN PROCESSING METHOD AND ELECTRONIC DEVICE**

(30) Priority: 17.06.2024 CN 202410783384
(71) Applicant: HUAWEI TECHNOLOGIES CO., LTD., Shenzhen 518129 (CN)
(72) Inventor: FAN, Yajun, Shenzhen, Guangdong 518129 (CN); ZHENG, Kaijie, Shenzhen, Guangdong 518129 (CN)
(74) Representative: Maiwald GmbH
(86) International application number: PCT/CN2025/088071
(87) International publication number: WO 2025/260915

(57) **Abstract**

This application provides a screen freezing processing method and an electronic device. A first component may be displayed on a screen of the electronic device. The first component has a capability of responding to a first operation. When detecting the first operation on the first component, the electronic device may detect whether the first component responds to the first operation. If the first component does not respond to the first operation, the electronic device may redraw the first component on the screen. In the method, whether screen freezing occurs on the electronic device may be detected based on whether a component displayed on the screen responds to a user operation, and when screen freezing occurs on the electronic device, a component that needs to be used by a user is enabled, by locally redrawing the component, to quickly recover to respond, so that a screen freezing problem is quickly resolved, and a waiting time of the user is reduced.

## Description

This application claims priority to Chinese Patent Application No. 202410783384.2, filed with the China National Intellectual Property Administration on June 17, 2024, and entitled "SCREEN FREEZING PROCESSING METHOD AND ELECTRONIC DEVICE", which is incorporated herein by reference in its entirety.

### TECHNICAL FIELD

This application relates to the field of terminal technologies, and in particular, to a screen freezing processing method and an electronic device.

### BACKGROUND

When an electronic device loads an interface, an exception or an error may occur. As a result, a component does not respond to a user operation, in other words, a screen freezing problem occurs. The screen freezing problem affects user experience in using the electronic device.

### SUMMARY

This application provides a screen freezing processing method and an electronic device. When a component does not respond to a user operation performed on the component, the electronic device may locally redraw the component, so that the component quickly recovers to respond, thereby solving a screen freezing problem and reducing a waiting time of a user.

According to a first aspect, this application provides a screen freezing processing method. An electronic device displays a first interface, where the first interface includes a first component. The electronic device detects a first operation performed on the first component. When the first component does not respond to the first operation, the electronic device redraws the first component. When the first component responds to the first operation, the electronic device displays a response result of the first component for the first operation.

The first operation may include but is not limited to: a tap operation, a touch operation, a touch and hold operation, a double-tap operation, a knuckle gesture operation, and the like.

It can be learned that, in the method, whether screen freezing occurs on the electronic device may be detected based on whether a component displayed on a screen responds to a user operation, and when screen freezing occurs on the electronic device, a component that needs to be used by a user is enabled, by redrawing the component, to quickly recover to respond, so that a screen freezing problem is quickly resolved, and a waiting time of the user is reduced. In this way, a case in which the electronic device restarts a related application to resolve a screen freezing problem can be reduced, and resources of the electronic device can be saved.

In some embodiments, the first component has a capability of responding to the first operation.

It may be understood that, that the first component does not respond to the first operation when the first component has the capability of responding to the first operation may be caused by an exception when the electronic device draws the first component. The exception in the drawing process usually occurs only once. No exception may exist when the electronic device redraws the first component. In this case, the redrawn first component may respond in time to a user operation performed on the first component.

With reference to the first aspect, in some embodiments, before the electronic device redraws the first component, the first component is a transparent component displayed in the foreground; and after the electronic device redraws the first component, the first component is a non-transparent component displayed in the foreground.

When the first component is a transparent component displayed in the foreground and has the capability of responding to the first operation, the electronic device may redraw the first component. If the first component has the capability of responding to the first operation, the first component should be visible to the user when the first interface is normally loaded, so that the user can operate the first component. However, if the first component is a transparent component displayed in the foreground and the first component has the capability of responding to the first operation, an exception may occur on the first component during drawing, and consequently the first component is invisible to the user. In addition, although the first component has the capability of responding to the first operation, the first component usually does not respond to the first operation in a transparent display state.

Because the foregoing interface loading exception that causes the first component to be drawn as a transparent component usually occurs only once, no exception may exist when the electronic device redraws the first component. In this case, there is a high probability that the electronic device may display the first component as a non-transparent component when redrawing the first component, so that the first component quickly recovers to respond to the first operation.

With reference to the first aspect, in some embodiments, the first component is a non-transparent component displayed in the foreground. The first operation includes k second operations, and k is a positive integer greater than 1. When the first component is a non-transparent component displayed in the foreground and does not respond to the second operations for k times, the electronic device may redraw the first component.

It may be understood that one or more components displayed on the screen may take a specific time to respond to a user operation. If k is 1, the electronic device redraws the first component when detecting only once that the first component does not respond to the second operation within a preset time. However, the first component may actually respond to the user operation, but a response speed is slow. In this case, the component redrawing causes a waste of resources of the electronic device. Therefore, the electronic device redraws the first component only when the first component does not respond to the second operation for a plurality of consecutive times, so that a case in which the electronic device redraws a non-abnormal component can be reduced, and a waste of resources of the electronic device can be reduced.

In addition, the first component is displayed in the foreground and is visible to the user. If the user urgently needs to use the first component, the user usually performs a user operation on the first component for a plurality of times in a short time. For example, if the user does not obtain a corresponding user interaction feedback after tapping the first component once, the user may tap the first component for a plurality of times to obtain the corresponding user interaction feedback. In consideration of urgency of using the first component by the user, the electronic device may first process a screen freezing problem by redrawing the first component. If the redrawn first component can respond in time to the user operation performed on the first component, the electronic device may provide a response result of the first component for the user operation (for example, performing a function corresponding to the first component or opening an interface corresponding to the first component), so that an application associated with the first component does not need to be restarted. In this way, the electronic device can resolve the screen freezing problem at minimum costs, so that a component that needs to be used by the user quickly recovers to respond, and a waiting time of the user is reduced.

It can be learned from the foregoing embodiment that the electronic device may determine, by performing one or more of the following detection on a component on which a user operation is performed, whether screen freezing occurs on the electronic device: whether the component is displayed in the foreground, whether the component is displayed as a transparent component, whether the component has a capability of responding to an operation performed on the component, and whether the component responds to an operation performed on the component. If the component is a transparent component displayed in the foreground and has a capability of responding to an operation 1, or the component is a non-transparent component displayed in the foreground and does not respond to user operations performed on the component for k times, it may indicate that screen freezing occurs on the electronic device. Then, the electronic device may redraw the foregoing component on which the user operation is performed, so that the component can quickly recover to respond to the user operation, thereby solving the screen freezing problem.

With reference to the first aspect, in some embodiments, the first component includes one or more child components, and the electronic device redraws the first component and the one or more child components.

With reference to the first aspect, in some embodiments, before the electronic device redraws the first component, a component ID of the first component is a first component ID, and after the electronic device redraws the first component, the component ID of the first component is a second component ID.

With reference to the first aspect, in some embodiments, when the first component is redrawn, another component in the first interface remains in a not redrawn state.

It can be learned that, because the first operation is performed on the first component, the first component is a component that needs to be used by the user. If no user operation is performed on another component in the first interface, it may indicate that the user does not need to use the another component temporarily. The electronic device may locally redraw a component, that is, redraws only a component that needs to be used by the user (for example, the first component), and does not redraw another component in the first interface. This not only saves resources of the electronic device, but also reduces a time required to redraw the component.

With reference to the first aspect, in some embodiments, after the electronic device redraws the first component, the electronic device detects a third operation performed on the first component, where an operation type of the third operation is the same as that of the first operation; and in response to the third operation, the electronic device performs a function corresponding to the first component or opens an interface corresponding to the first component.

It can be learned that after the electronic device redraws the first component, the first component may recover to respond to the user operation. In this way, the electronic device may not need to restart a process associated with the first component. The electronic device can resolve the screen freezing problem at minimum costs, so that a component that needs to be used by the user quickly recovers to respond, and a waiting time of the user is reduced.

With reference to the first aspect, in some embodiments, after the electronic device redraws the first component, the electronic device detects a fourth operation performed on the first component, and the first component has a capability of responding to the fourth operation; and when the first component does not respond to the fourth operation, the electronic device restarts a process associated with the first component.

It can be learned that, after the electronic device redraws the first component, if the first component still does not respond to the operation performed on the first component, the electronic device may restart the process associated with the first component to resolve the screen freezing problem.

With reference to the first aspect, in some embodiments, the first interface includes a second component and a third component, the second component is a transparent component displayed in the foreground, and the third component is a non-transparent component displayed at a lower layer of the second component. The electronic device detects a fifth operation performed on positions of the second component and the third component, the second component does not have capability of responding to the fifth operation, and the third component has a capability of responding to the fifth operation. In response to the fifth operation, the electronic device performs a function corresponding to the third component or opens an interface corresponding to the third component.

It can be learned that, when the second component is displayed in a transparent state in the foreground, the user cannot see the second component but can see a component displayed at the lower layer of the second component, for example, the third component. Because the second component does not have the capability of responding to the fifth operation, the electronic device may determine that the fifth operation of the user at the positions of the second component and the third component is a user operation on the third component. That is, even if the third component is covered by a transparent component (for example, the second component), the third component may still respond to the user operation when the transparent component does not have the capability of responding to the user operation. In this way, user experience can be improved.

With reference to the first aspect, in some embodiments, a process run by the electronic device includes a first process, and if a memory leakage amount of the first process is less than or equal to a first threshold, the electronic device uses a first policy for the first process, where the first policy includes one or more of the following: forbidding a process to create a new thread in the background, forbidding a process to be associated with or bound to a service in the background, no longer allocating a new memory to a process, and periodically performing memory leakage detection on a process.

The first policy may be a leakage prevention policy in this embodiment of this application.

It can be learned that, if the memory leakage amount of the first process is less than or equal to the first threshold, it may indicate that a current memory leakage amount of the first process is small, and causes small impact and harm in the electronic device. Therefore, the electronic device may use the leakage prevention policy for the first process. The leakage prevention policy is mainly used to prevent a memory leakage amount of a process from further increasing without affecting process running as much as possible. This can reduce impact on running of the first process, so as to avoid affecting use of an application corresponding to the first process by the user, and can prevent an increase in the memory leakage amount of the first process, thereby reducing a case in which screen freezing occurs on the electronic device due to memory leakage.

When the memory leakage amount of the first process is greater than the first threshold, if an available memory amount of the electronic device is less than or equal to a second threshold, the electronic device uses a second policy for the first process, where the second policy includes one or more of the following: garbage collection, thread local caching, memory compression, and memory reclamation.

The second policy may be a leakage tolerance policy in this embodiment of this application.

It can be learned that, if the memory leakage amount of the first process is greater than the first threshold, it may indicate that the current memory leakage amount of the first process is large. If a memory that can be currently used by the electronic device is greater than the second threshold, it may indicate that a currently available memory of the electronic device is sufficient. When the memory leakage amount of the first process is large, but the currently available memory of the electronic device is sufficient, the electronic device can basically bear impact caused by memory leakage of the first process. Therefore, the electronic device may use the leakage tolerance policy for the first process. This can reduce impact on running of the first process as much as possible while reducing memory leakage of the first process, thereby reducing impact on using the application corresponding to the first process by the user.

When the memory leakage amount of the first process is greater than the first threshold, if the available memory amount of the electronic device is greater than the second threshold, the electronic device uses a third policy for the first process, where the third policy includes one or more of the following: clearing a foreground process and providing a process clearing prompt, clearing a foreground associated process when a screen of the electronic device is turned off, preferentially sorting and clearing a non-resident process and a non-foreground dependent process, and killing a background process for reclamation.

The third policy may be a leakage removal policy in this embodiment of this application.

It can be learned that, if the memory leakage amount of the first process is greater than the first threshold, it may indicate that the current memory leakage amount of the first process is large. If a memory that can be currently used by the electronic device is less than or equal to the second threshold, it may indicate that a currently available memory of the electronic device is insufficient. In this case, if a process in the electronic device needs to apply for a new memory, memory overflow may occur in the electronic device. The electronic device may freeze when running a program, and therefore screen freezing may likely occur. Therefore, the electronic device may use the leakage removal policy for the first process. In this way, memory leakage of the first process can be eliminated, and a case in which screen freezing occurs on the electronic device due to memory leakage can be reduced. In addition, if screen freezing caused by memory leakage occurs in the electronic device, the electronic device may eliminate memory leakage of one or more processes by using the leakage removal policy, so that an available memory of the electronic device increases. The screen freezing problem can be resolved as the available memory of the electronic device increases.

With reference to the first aspect, in some embodiments, the electronic device stores a first memory usage threshold, and the memory leakage amount of the first process is determined based on the first memory usage threshold and a memory amount occupied by the first process. The first memory usage threshold may reflect a peak value of a memory occupied by the first process when no memory leakage occurs or only a small amount of memory leakage occurs. The memory leakage amount of the first process may be a value obtained by subtracting the first memory usage threshold from the memory occupied by the first process.

After the second policy or the third policy is used for the first process, the electronic device detects a memory reclamation benefit of the electronic device, where the memory reclamation benefit is determined based on an estimated memory reclamation amount and an actual memory reclamation amount of the first process; and the electronic device adjusts the first memory usage threshold based on the memory reclamation benefit.

The estimated memory reclamation amount of the first process may be determined based on the current first memory usage threshold and the memory amount occupied by the first process. Alternatively, the estimated memory reclamation amount of the first process may be determined based on the current first memory usage threshold, the memory amount occupied by the first process, and the first threshold. The actual memory reclamation amount of the first process may be a memory amount actually reclaimed from the memory occupied by the first process, that is, an increment in an available memory of the entire device after the memory of the first process is reclaimed.

It can be learned that, when memory leakage occurs in the first process, the electronic device may dynamically adjust, based on a result of performing memory reclamation on the first process, the memory usage threshold corresponding to the first process (that is, the first memory usage threshold). In this way, the first memory usage threshold can more accurately reflect the peak value of the memory occupied by the first process when no memory leakage occurs or only a small amount of memory leakage occurs, thereby improving accuracy of detecting the memory leakage amount.

According to a second aspect, this application provides an electronic device. The electronic device may include a storage and a processor. The storage may be configured to store a computer program. The processor may be configured to invoke the computer program, to perform the method according to any possible implementation of the first aspect.

According to a third aspect, this application provides a computer-readable storage medium, where the computer-readable storage medium stores instructions, and the instructions are executed by a processor to implement the method according to any possible implementation of the first aspect.

According to a fourth aspect, this application provides a computer program product, where the computer program product may include computer instructions, and when the computer instructions are run on a processor, the method according to any possible implementation of the first aspect may be implemented.

According to a fifth aspect, this application provides a chip. The chip is used in an electronic device. The chip includes one or more processors. The processor is configured to invoke computer instructions, so that the electronic device performs the method according to any possible implementation of the first aspect.

It may be understood that the electronic device provided in the second aspect, the computer-readable storage medium provided in the third aspect, the computer program product provided in the fourth aspect, and the chip provided in the fifth aspect are all configured to perform the method provided in embodiments of this application. Therefore, for beneficial effect that can be achieved by the electronic device, the computer storage medium, the computer program product, refer to the beneficial effect in the corresponding methods. Details are not described herein again.

### BRIEF DESCRIPTION OF DRAWINGS

FIG. 1A is a diagram of a hardware structure of an electronic device 100 according to an embodiment of this application;
FIG. 1B is a block diagram of a software structure of an electronic device 100 according to an embodiment of this application;
FIG. 2 is a diagram of a structure of an electronic device 100 according to an embodiment of this application;
FIG. 3 is a flowchart of a screen freezing processing method according to an embodiment of this application;
FIG. 4 is a flowchart of a screen freezing processing method according to an embodiment of this application;
FIG. 5 is a diagram of redrawing a component according to an embodiment of this application;
FIG. 6A and FIG. 6B are some other diagrams of redrawing a component according to an embodiment of this application;
FIG. 7 is a flowchart of a method for processing memory leakage according to an embodiment of this application; and
FIG. 8 is a flowchart of a method for adjusting a memory usage threshold according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe specific embodiments, but not to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for description, and shall not be understood as an indication or implication of relative importance or an implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some embodiments, when a user interface is drawn, due to a problem such as a single-time interface loading exception (for example, an interface loading sequence disorder), a component displayed on a screen of an electronic device has a capability of responding to a user operation, but does not respond to the user operation. In addition, the electronic device may further draw a transparent component on the screen. The transparent component is a component visible on the screen when the interface is normally loaded, but cannot be seen by a user because the component is transparently displayed when the interface is abnormally loaded. Although one or more transparent components have a capability of responding to a user operation, the one or more transparent components do not respond to the user operation.

The component that has a capability of responding to a user operation but does not respond to the user operation may be referred to as an abnormal component. The user operation may include but is not limited to: a tap operation, a touch operation, a touch and hold operation, a double-tap operation, a knuckle gesture operation, and the like. The capability of responding to a user operation may indicate that the electronic device may generate a corresponding user operation event (for example, a tap event, a touch and hold event, or a double-tap event) based on the user operation on the component (for example, a user operation performed on a display position of the component), and provide a user interaction feedback (for example, interface jumping, or a change of interface display content) of the component on the screen.

Existence of the abnormal component causes the user to perform a user operation for a plurality of times but obtain no corresponding user interaction feedback, which severely affects user experience in using the electronic device.

For ease of understanding a screen freezing processing method provided in this application, some concepts in this application are first described herein.

### 1. Screen freezing.

Screen freezing may be a case in which an abnormal component is displayed on a screen of an electronic device. In other words, if the electronic device receives one or more user operations on a component that is on the screen and that has a capability of responding to the user operation, but does not provide a corresponding user interaction feedback, screen freezing occurs on the electronic device.

In some embodiments, screen freezing may be caused by a transparent component. Some components have a capability of responding to a user operation and should be visible on the screen. However, they become transparent components due to an interface loading exception during drawing. One or more components do not respond to a user operation in a transparent display state. In addition, a lower layer of the one or more transparent components displays another visible component that can be seen by a user. Because the transparent component covers an upper layer of the visible component, the visible component cannot sense a user operation, and therefore cannot normally respond to the user operation.

In some embodiments, screen freezing may alternatively be caused by memory leakage. Memory leakage may cause a waste of a memory of the electronic device. Thus, an available memory in the electronic device is scarce, and a program running speed is slowed down or even a system crashes. When available memory resources are insufficient, program running on the electronic device freezes, and a component responds slowly to a user operation or freezes. As a result, the user may continuously perform user operations on the component for a plurality of times, but the electronic device does not provide a corresponding user interaction feedback for a long time.

### 2. Component.

The component may be an interface element such as a card, an icon, a button, a menu, a tab, a text box, a dialog box, or a navigation bar displayed on a screen. In some embodiments, there may be a hierarchical relationship between components. For example, a component (that is, a parent component) may include one or more child components. The child component may also be referred to as an affiliated component of the parent component.

In some embodiments, one or more components displayed on the screen have a capability of responding to a user operation. For example, an APP icon is displayed on the screen. The APP icon may be used to provide a shortcut entry for starting a corresponding APP. In response to a user operation on the APP icon, the electronic device may display, on the screen, a user interface of the APP corresponding to the APP icon. In some embodiments, one or more components that do not have a capability of responding to a user operation may further exist on the screen. For example, a time component is displayed on the screen. The time component may indicate current time information. The time component does not have a capability of responding to a user operation.

For example, a sports and health card is displayed on the screen. The sports and health card may include one or more child components, for example, a heart rate component and a step count component. The heart rate component may indicate a current heart rate of a user. The step count component may indicate a quantity of steps that the user walks. The sports and health card may be used to invoke a user interface of a sports and health application. In response to a tap operation performed on a position of the heart rate component of the sports and health card, a user interface displayed by the electronic device may be the same as a user interface displayed by the electronic device in response to a tap operation performed on a position of the step count component of the sports and health card. In other words, the sports and health card has a capability of responding to a user operation. However, the child components in the sports and health card do not have a corresponding user operation capability.

It may be understood that, that a component responds to a user operation may indicate that the electronic device responds to the user operation on the component and provides a corresponding user interaction feedback.

In some embodiments, the electronic device may transparently display one or more components on the screen. The transparently displayed component may be referred to as a transparent component. One or more components on the screen may be set to be transparently displayed, that is, the one or more components are invisible to the user after being drawn. One or more components on the screen may further be transparently displayed due to an exception, that is, the one or more components should be visible to the user after being drawn, but become transparent components due to the exception.

### 3. Window and transparent component.

The window may be a user interface that displays a computer operation in a form of a window. The window may be a basic unit that is set in a graphical user interface in an application to use data. The window may include one or more components. The window may be used by a user to interact with an operating system or an application of an electronic device.

In some embodiments, some or all regions in a window may be transparently displayed. For example, a transparently displayed region exists in a window 1. Another window is further displayed at a lower layer of the window 1. The user may view, through the transparently displayed region in the window 1, content displayed at the lower layer of the window 1.

The transparent component may be a component that is transparently displayed and is invisible to the user. One window may include one or more transparent components. In some embodiments, if the transparent component includes a child component, the child component in the transparent component is also transparently displayed. Contrary to the transparent component, a component visible to the user on a screen may be referred to as a non-transparent component. The component may be set as a transparent component, that is, the component is invisible to the user when an interface is normally displayed. Alternatively, a component on the screen may be transparently displayed due to an exception, that is, the component should be visible to the user after being drawn, but becomes a transparent component due to the exception.

In some embodiments, transparency of the transparent component may be 0 or within a preset range close to 0. A value range of transparency may be [0, 1], where 0 indicates "completely transparent" and 1 indicates "completely visible".

### 4. Instrumentation.

Instrumentation may be used to insert custom code in one or more positions of code. Because the inserted custom code may run with original code, instrumentation may be used to obtain information about an operating system and application running, so as to debug, analyze performance, and evaluate security of the operating system and the application, and the like. For example, an electronic device may obtain, through instrumentation, information about a component displayed on a screen (for example, a display position of the component, transparency of the component, and a hierarchical relationship between components) and whether the component responds to a user operation. The information obtained through instrumentation may include but is not limited to an indicator, a log, a track record, and the like. In some embodiments, instrumentation may also be used to modify code to implement a new function or fix a known error.

### 5. Memory leakage.

Memory leakage may mean that an application cannot release a memory space that has been applied for after applying for a memory, thereby causing a waste of memory space. For example, an object or a variable that is no longer used in the application continuously occupies the memory, and the occupied memory cannot be released. The application that occupies the memory no longer uses the memory, and because the memory is not released, the memory cannot be used by another application either. Accumulation of memory leakage cause memory overflow. Memory overflow may mean that when an application applies for a memory, an electronic device does not have a sufficient memory space for the application to use.

### 6. Process.

The process may represent a running program in a system and is an abstraction of the running program. Each running program can form one process. A process is a basic unit for an operating system to allocate and schedule resources. Each process has its own independent address space and execution status.

For an operating system that supports a plurality of processes, a CPU can run a plurality of processes alternately. The CPU may quickly switch from one process to another process, and each process runs for dozens or hundreds of milliseconds. Although a single-core CPU runs only one process at a moment, the CPU can run a plurality of processes alternately within a period of time (for example, within 1 second). Because a speed of alternating between processes is high, in terms of user perception, an electronic device 100 may simultaneously run a plurality of applications. For example, a user may use the electronic device 100 to listen to music while editing a document.

In some embodiments, processes are classified based on priorities, and processes in descending order of priorities may be: a foreground process, a visible process, a service process, a cache process, and an empty process. The operating system may ensure, as far as possible, that a process with a high priority exists as long as possible. If resources (such as memory resources) are insufficient, to create a new process and ensure running of an important process, the operating system may end some processes with low priorities, and reclaim memories occupied by the processes.

Foreground processes may include a process currently being displayed on a screen and some system processes. The foreground process may be a process that is interacting with a user. For example, a window 1 is displayed on the screen of the electronic device 100. The window 1 obtains a focus. The user may interact with a process corresponding to the window 1 by performing an operation on the window 1 (for example, tapping a component in the window 1, or performing text input in the window 1). The process corresponding to window 1 is a foreground process. For another example, the screen of the electronic device 100 further displays a status bar including one or more elements such as a signal strength indicator, a battery level indicator, and time. The status bar may be displayed when the electronic device 100 runs a system process. The system process corresponding to the status bar is also a foreground process.

A visible process may include a process whose user interface can be seen by the user, but does not interact with the user in the foreground. For example, the window 1 is displayed on the screen of the electronic device 100, and some or all regions in the window 1 are transparently displayed. The electronic device 100 further displays a window 2 at a lower layer of the window 1. The window 1 is displayed at the top of all windows on the screen. That is, the window 1 is displayed in the foreground, and a component in the window 1 is also displayed in the foreground. The process corresponding to the window 1 is a foreground process. Because some or all regions in the window 1 are transparently displayed, although the window 2 is covered by the window 1, the window 2 is still a visible window. A process corresponding to the window 2 is a visible process.

For another example, when the window 1 is displayed on the screen of the electronic device 100, and the window 1 obtains the focus, the electronic device 100 newly displays a chat window on the screen. The chat window is displayed above the window 1, and partially covers the window 1. In this case, the chat window obtains the focus, and the window 1 loses the focus. Although the user can still see the window 1 on the screen, the user interacts with the chat window instead of the window 1. The process corresponding to the window 1 is changed from a foreground process to a visible process. A process corresponding to the chat window is a foreground process. If the electronic device 100 receives an operation on the window 1, the electronic device 100 may display the window 1 above the chat window. The window 1 regains the focus. The process corresponding to the window 1 is changed to a foreground process again.

The service process may include a process that does not have a user interface and does not interact with the user directly, but can run in the background. In some embodiments, the service process may be a process started by using a startService() method. For example, a process of playing music in the background and a process of downloading music in the background are service processes.

The background process may include a process that is currently invisible to the user. In some embodiments, the background process may be a process corresponding to an Activity component that enters a stopped state by invoking an onStop() method but is not destroyed by invoking an onDestroy() method. For example, when the window 1 is displayed on the screen of the electronic device 100, and the window 1 obtains the focus, the electronic device 100 opens a new window 2. The window 1 is not closed. The window 2 is displayed above the window 1 and completely shields the window 1. That is, after the electronic device 100 displays the window 2, the window 1 is invisible to the user. In this case, the window 2 obtains the focus, and the window 1 loses the focus. The process corresponding to the window 1 changes from a foreground process to a background process. A process corresponding to the window 2 is a foreground process. For another example, when the window 1 is displayed on the screen of the electronic device 100, and the window 1 obtains the focus, the electronic device 100 receives an operation of returning to a desktop home screen (for example, an operation of tapping a Home key), and the electronic device 100 may display the desktop home screen. In this case, a process 1 corresponding to the window changes from a foreground process to a background process.

The empty process may be a process in which no program is running. The empty process may be generally used to cache data, so as to shorten a startup time required by an application to which the empty process belongs to run a program in the empty process next time.

This application provides a screen freezing processing method. A component 1 may be displayed on a screen of an electronic device. The component 1 has a capability of responding to a user operation. When detecting a user operation on the component 1, the electronic device may detect whether the component 1 responds to the user operation. If the component 1 does not respond to the user operation, the electronic device may redraw the component 1 on the screen. In a case of redrawing the component 1, another component on the screen may not need to be redrawn.

In some embodiments, the component 1 may be transparently displayed due to an exception. To compensate for an error in drawing the component 1, the electronic device may redraw the component 1. The component 1 can be properly displayed after being redrawn and is visible to a user. The component 1 can respond to a user operation when visible. The electronic device 100 may provide a corresponding user interaction feedback in response to a user operation on the redrawn component 1. In other words, the component 1 may be a transparent component before being redrawn. The component 1 may be a non-transparent component after being redrawn, and is visible to the user.

It can be learned that when a component (for example, the component 1) that needs to be used by the user does not respond to a user operation, the electronic device may redraw the component that needs to be used by the user, to resolve a screen freezing problem, so that the component that needs to be used by the user can quickly respond to the user operation. Because the user temporarily does not need to use another component in a window in which the component that needs to be used by the user is located, the electronic device may not need to waste resources to redraw all components. In the method, whether screen freezing occurs on the electronic device may be detected based on whether a component displayed on the screen responds to a user operation, and when screen freezing occurs on the electronic device, a component that needs to be used by a user is enabled to quickly recover to respond, so that a screen freezing problem is quickly resolved, and a waiting time of the user is reduced. In this way, a case in which the electronic device restarts a related application can be reduced, and resources of the electronic device can be saved.

The following describes a structure of an electronic device 100 in this application.

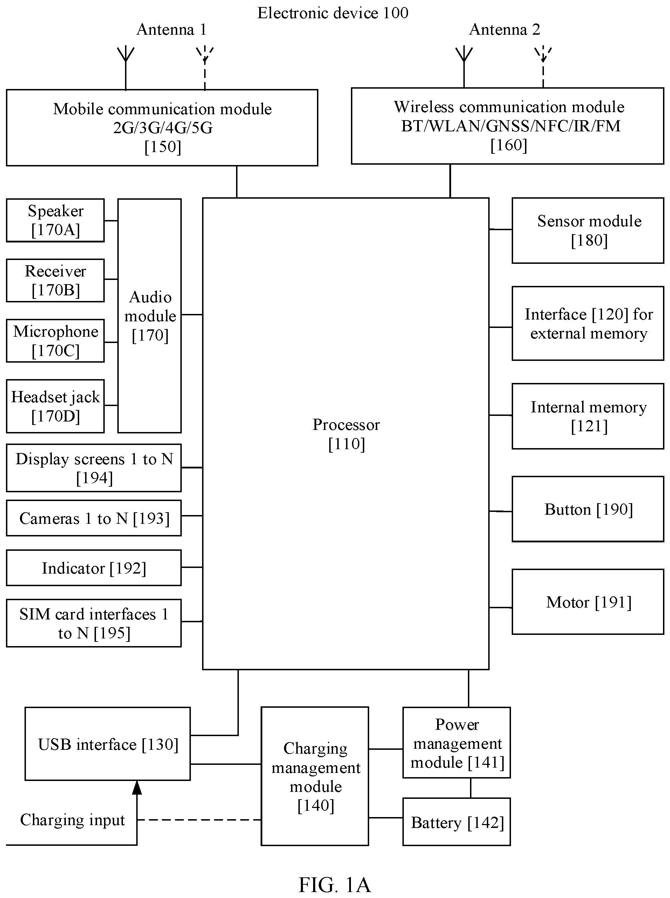

**FIG. 1A** **is a diagram of an example hardware structure of the electronic device 100.**

As shown in FIG. 1A, the electronic device 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a storage, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A storage may be further disposed in the processor 110, and is configured to store instructions and data. In some embodiments, the storage in the processor 110 is a cache. The storage may store instructions or data just used or cyclically used by the processor 110. If the processor 110 needs to use the instructions or the data again, the processor may directly invoke the instructions or the data from the storage. This avoids repeated access, reduces waiting time of the processor 110, and improves system efficiency.

In this application, the storage may store a computer program, to enable the controller or the processor to implement the screen reading method in this application by using an interface or a protocol. For example, the computer program stored in the storage may be used to: draw a window and a component in the window on a screen, perform instrumentation detection on the component, detect whether the component has a capability of responding to a user operation, detect whether the component is a transparent component, detect whether the component is displayed in the foreground, detect whether there is a user operation performed on the component, detect whether the component responds to a user operation, perform memory leakage detection on a process in the electronic device 100, adopt a corresponding process management policy based on an ongoing memory leakage situation, and the like.

The USB interface 130 is an interface complying with a USB standard. The USB interface 130 may be configured to connect to a charger to charge the electronic device 100, or may be configured to transmit data between the electronic device 100 and a peripheral device, or may be configured to connect to a headset for playing audio through the headset.

The charging management module 140 is configured to receive a charging input from a charger. The charger may be a wireless charger or a wired charger. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display screen 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display screen 194, the application processor, and the like. The GPU is a microprocessor for image processing, and is connected to the display screen 194 and the application processor. The GPU is configured to: perform mathematical and geometric computation, and render an image.

The display screen 194 is configured to display an image, a video, and the like. In some embodiments, the electronic device 100 may include one or N display screens 194, where N is a positive integer greater than 1.

The electronic device 100 may implement a photographing function through the camera 193, the ISP, the video codec, the GPU, the display screen 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be used to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some examples, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may indicate a charging status and a power change, or may indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as conversation and data communication. In some examples, the electronic device 100 uses an eSIM, namely, an embedded SIM card. The eSIM card may be embedded into the electronic device 100, and cannot be separated from the electronic device 100.

A software system of the electronic device 100 may use a layered architecture, an eventdriven architecture, a microkernel architecture, a micro service architecture, or a cloud architecture. In embodiments of this application, an Android^{®} system with a layered architecture is used as an example to illustrate a software structure of the electronic device 100.

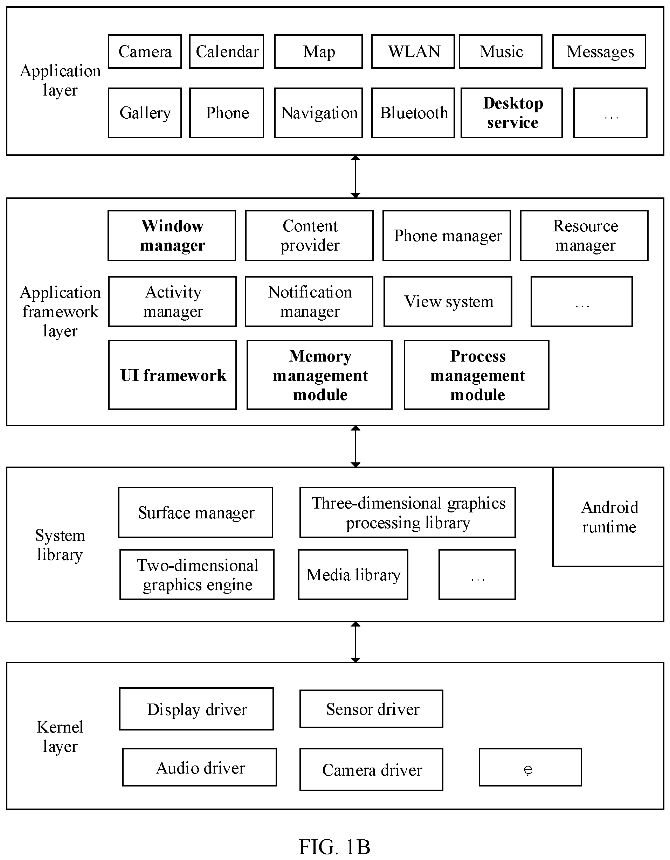

**FIG. 1B** **is a block diagram of an example software structure of the electronic device 100.**

In a layered architecture, software is divided into several layers, and each layer has a clear role and task. The layers communicate with each other through a software interface. In some embodiments, the Android^{®} system is divided into four layers that are respectively an application layer, an application framework layer, an Android runtime (Android Runtime) and system library, and a kernel layer from top to bottom.

The application layer may include a series of application packages.

As shown in FIG. 1B, the application packages may include applications such as Camera, Gallery, Calendar, Phone, Maps, Navigation, WLAN, Bluetooth, Music, Messages, and Desktop Service. The desktop service may be used to manage an interface element (for example, an interface element provided by an operating system or an interface element provided by an application) on a screen. In some embodiments, when a component (for example, an APP icon, a service card, a desktop folder, or a component in a window of an application) that is on the screen and that has a capability of responding to a user operation does not respond to the user operation, the electronic device may redraw the component by using the desktop service.

The application framework layer provides an API and a programming framework for an application at the application layer. The application framework layer includes some predefined functions.

As shown in FIG. 1B, the application framework layer may include a window manager, a content provider, a view system, a phone manager, a resource manager, a notification manager, an activity manager, a user interface (user interface, UI) framework, a memory management module, a process management module, and the like.

The window manager is configured to manage a window program. The window manager may obtain a size of the display screen, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in the status bar (for example, a pull-down notification bar), and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on the background, or may be a notification that appears on the screen in a form of a dialog window. For example, text information is displayed in the status bar, an alert tone is made, the electronic device vibrates, or the indicator blinks.

The activity manager is responsible for managing an activity (activity), and is responsible for starting, switching, and scheduling each component in a system, and managing and scheduling an application. The activity manager can be invoked by an upper-layer application to start a corresponding activity.

The UI framework can be used to provide a framework capability required for UI interface development and running. For example, the UI framework may provide a UI development infrastructure, including a UI control (such as a button/list), a view layout (for placing/arranging a corresponding UI control), an animation mechanism (animation design and effect presentation), interaction event processing (such as tap/slide), and a corresponding programming language and programming model. From a perspective of system running, the UI framework may also include runtime, which is responsible for resource loading, UI rendering, event response, and the like required when an application is executed in the system. In some embodiments, the UI framework may run a program of a developer on a specific system platform in combination with a render engine.

The memory management module may be configured to manage the memory of the electronic device 100. The memory management module may allocate a corresponding memory to each process based on a memory allocation request of the process in the electronic device 100. The memory management module may further perform an operation such as memory reclamation and memory compression.

The process management module may be configured to manage a process in the electronic device 100. The process management module may create a process, allocate a resource such as a CPU time slice to the process, manage a status of the process, manage a new thread of the process, and clear the process.

The Android runtime includes a core library and a virtual machine. The Android runtime is responsible for scheduling and management of the Android system.

The core library includes two parts: a function that needs to be invoked in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

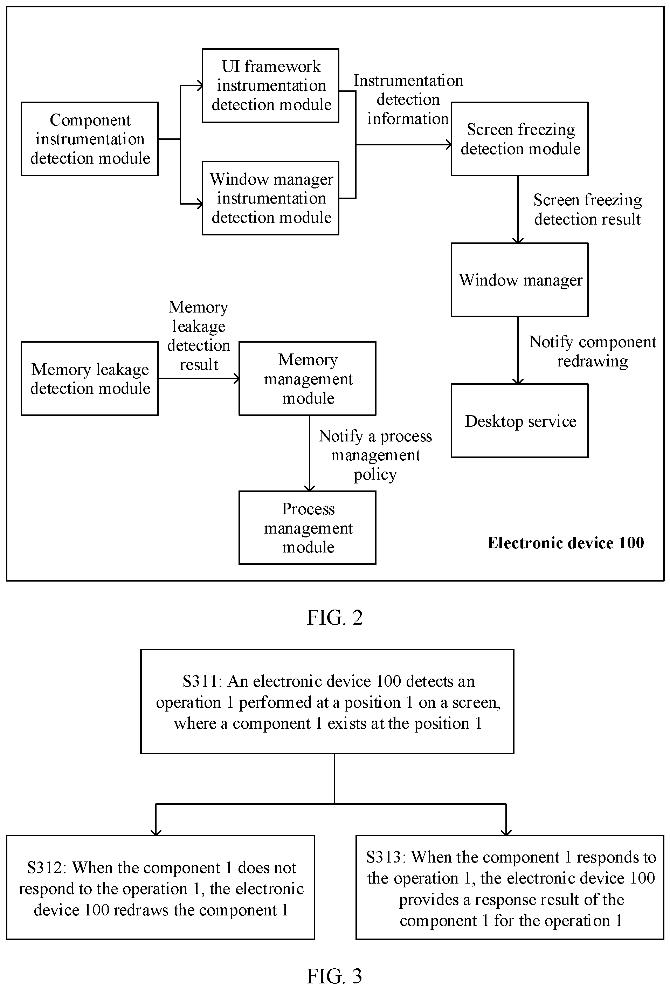

FIG. 2 is a diagram of an example structure of another electronic device 100 according to this application.

As shown in FIG. 2, the electronic device 100 may include a component instrumentation detection module, a UI framework instrumentation detection module, a window manager instrumentation detection module, a screen freezing detection module, a window manager, a desktop service, a memory leakage detection module, a memory management module, and a process management module.

In some embodiments, the electronic device 100 may perform instrumentation on a component, a UI framework, and the window manager. The instrumentation may be source code instrumentation.

The source code instrumentation performed on the component by the electronic device 100 may include: instrumentation in a system interface that needs to be invoked when the component runs. In other words, the electronic device 100 may insert custom code into code of one or more system interfaces. When the component invokes the system interface on which instrumentation is performed during running, the inserted custom code runs with the component. In this way, the component instrumentation detection module may obtain the component display information based on a result of running the custom code for instrumentation on the component. The component display information may include but is not limited to: a component identifier (identifier, ID), a display position of the component, a child component included in the component, transparency of the component, and the like. The component ID may be used to uniquely identify a corresponding component on a screen.

Because the UI framework and the window manager are modules provided by an operating system of the electronic device 100, the electronic device 100 may insert custom code into source code of the UI framework, and may insert custom code into source code of the window manager. The UI framework instrumentation detection module may obtain component operation information based on a result of running the custom code for instrumentation on the UI framework. The component operation information may include but is not limited to: whether the component has a capability of responding to a user operation, a position at which the user operation acts, a type of the user operation, whether the component responds to the user operation, and the like. In some embodiments, whether the component responds to the user operation may be determined based on whether the component has UI callback for the user operation. UI callback may be a function performed by the component when the component responds to the user operation. The electronic device 100 may update a user interface based on UI callback, and provide a response result of the component to the user operation. That is, if the component has UI callback for the user operation, it may indicate that the component responds to the user operation. If the component does not have UI callback for the user operation, the component does not respond to the user operation. The window manager instrumentation detection module may obtain window management information based on a result of running the custom code for instrumentation on the window manager. The window management information may include but is not limited to a display level of a window, and the like. The display level of the window may indicate a display position relationship between an upper layer and a lower layer of the window. For example, the electronic device may determine, based on the display level of the window, whether the window is displayed in the foreground. The electronic device may further determine, based on display levels of a window 1 and a window 2, whether the window 1 is displayed at an upper layer of the window 2.

A specific implementation method for instrumentation of the electronic device 100 is not limited in this embodiment of this application. For example, in addition to source code instrumentation, the electronic device 100 may further perform instrumentation detection on the component by using a method such as bytecode instrumentation.

In some embodiments, a component instrumentation detection module of a component, for example, a component 1, may send component display information to the UI framework instrumentation detection module and the window manager instrumentation detection module. The UI framework instrumentation detection module may obtain component operation information of the component 1. The window manager instrumentation detection module may obtain window management information of a window to which the component 1 belongs.

In some embodiments, the UI framework instrumentation detection module and the window manager instrumentation detection module may send instrumentation detection information of the component to the screen freezing detection module. Instrumentation detection information of a component may include component display information of the component, component operation information of the component, and window management information of a window to which the component belongs.

In addition to instrumentation detection on a component, the electronic device 100 may further obtain, by using another method, component display information of the component, component operation information of the component, and window management information of a window to which the component belongs.

The screen freezing detection module may be configured to detect, based on the instrumentation detection information of the component, whether screen freezing occurs on the electronic device. A specific method for detecting, by the screen freezing detection module, whether screen freezing occurs on the electronic device is described in a subsequent embodiment, and details are not described herein.

In some embodiments, if a user operation is performed on a component that has a capability of responding to a user operation, but the component does not respond to the user operation, the screen freezing detection module may determine that screen freezing occurs on the electronic device. Then, the screen freezing detection module may send a screen freezing detection result to the window manager. The screen freezing detection result may include a component ID. A component corresponding to the component ID may be the foregoing component that does not respond to the user operation.

The window manager may send a component redrawing notification to the desktop service based on the screen freezing detection result. The component redrawing notification may include the component ID in the screen freezing detection result. The desktop service can redraw the component corresponding to the component ID.

It can be learned that the electronic device 100 may perform instrumentation detection on the component to determine whether the component responds to the user operation. If the component has the capability of responding to the user operation but does not respond to the user operation, the electronic device 100 may redraw the component by using the desktop service, to compensate for an error that occurs when the component is previously drawn. In this way, the component can quickly respond to the user operation after being redrawn. According to the method, a screen freezing problem can be quickly resolved, a time for waiting for a component to respond after a user performs a user operation on the component is reduced, and a case in which the screen freezing problem is resolved by restarting a related application can be reduced, thereby saving resources of the electronic device.

The memory leakage detection module may be configured to detect whether memory leakage exists in one or more processes in the electronic device 100, and detect a leakage amount of memory leakage of the process. The memory leakage detection module may send a memory leakage detection result to the memory management module. The memory leakage detection result may include a process identifier, and a leakage amount of memory leakage of a process corresponding to the process identifier.

The memory management module may determine a process management policy based on the memory leakage detection result, and notify the process management module of the process management policy. The process management module may perform response management on the process according to the process management policy. In some embodiments, the process management policy may include but is not limited to a leakage prevention policy, a leakage tolerance policy, a leakage removal policy, and the like. Specific content of the process management policy is described in a subsequent embodiment, and is not described herein.

It can be learned that the electronic device 100 may manage a process when memory leakage occurs, and may adopt different process management policies based on different leakage amounts. In this way, not only screen freezing caused by memory leakage can be reduced, but also impact of the foregoing process management on use of an application by the user can be reduced.

FIG. 3 is an example flowchart of a screen freezing processing method according to an embodiment of this application.

S311: An electronic device 100 detects an operation 1 performed at a position 1 on a screen, where a component 1 exists at the position 1.

The component 1 may be a component that is in the electronic device 100 and that is displayed in the foreground. In other words, the component 1 may be displayed at a top layer of all interface elements.

The operation 1 may be a tap operation, a touch and hold operation, a double-tap operation, or the like. A type of the operation 1 is not limited in this embodiment of this application.

In some embodiments, the component 1 may be transparently displayed due to an exception. In other words, the component 1 is a transparent component or a non-transparent component.

In some embodiments, the component 1 has a capability of responding to the operation 1. The electronic device 100 may detect whether the component 1 responds to the operation 1. Based on a response status of the component 1 to the operation 1, the electronic device 100 may perform step S312 or step S313.

S312: When the component 1 does not respond to the operation 1, the electronic device 100 redraws the component 1.

If the component 1 does not respond to the operation 1, the electronic device 100 may redraw the component 1. If the component 1 includes a child component, redrawing the component 1 may include redrawing the child component in the component 1. If the component 1 does not respond to the operation 1, it may indicate that screen freezing occurs on the electronic device 100.

In some embodiments, in addition to the component 1, another component is further displayed on the screen. When redrawing the component 1, the electronic device 100 may not need to redraw the another component.

It may be understood that, that the component 1 does not respond to the operation 1 may be because an exception occurs when the electronic device 100 draws the component 1. The electronic device 100 may process a screen freezing problem by redrawing the component 1. The electronic device 100 may not be abnormal when redrawing the component 1. In this case, the redrawn component 1 may respond in a timely manner to a user operation performed on the component 1.

In some embodiments, a window 1 includes the component 1. If the component 1 does not respond to the operation 1, the electronic device 100 may redraw all components of the window 1 including the component 1. In this way, the electronic device 100 can redraw, in a timely manner after screen freezing occurs, a window that a user wants to open, thereby reducing a time for waiting for the component to respond to the user operation when the user wants to open another component.

In some embodiments, if the redrawn component 1 still does not respond to a user operation performed on the component 1, the electronic device 100 may restart an application associated with the component 1 to resolve a screen freezing problem. Optionally, the electronic device 100 may store data such as interface information of the application associated with the component 1 when the application is closed, so that after the application is restarted, the application can recover to display an interface displayed before the restart.

The electronic device 100 may restart the application associated with the component 1 when the component 1 does not respond, within a preset time period, to a user operation performed on the component 1. A value of the preset time period is not limited in this embodiment of this application. For example, the preset time period may be a value such as 4 seconds or 5 seconds.

It can be learned that a time and resources required for redrawing the component 1 are less than those required for restarting the application. When screen freezing occurs and a component that needs to be used by the user is the component 1, the electronic device 100 may first attempt to resolve the screen freezing problem by redrawing the component 1. If the redrawn component 1 can respond in time to the user operation performed on the component 1, the electronic device 100 may provide a response result of the component 1 to the user operation, so that the application associated with the component 1 does not need to be restarted. In this way, the electronic device 100 can resolve the screen freezing problem at minimum costs, so that a component that needs to be used by the user quickly recovers to respond, and a waiting time of the user is reduced.

S313: When the component 1 responds to the operation 1, the electronic device 100 provides a response result of the component 1 for the operation 1.

If the component 1 responds to the operation 1, the electronic device 100 may provide the response result of the component 1 to the operation 1. For example, in response to the operation 1 on the component 1, the electronic device 100 may display the response result of the component 1 to the operation 1, and the electronic device 100 may update interface display content, and may open an interface corresponding to the component 1. Alternatively, in response to the operation 1 on the component 1, the electronic device 100 may perform a function corresponding to the component 1. The response result of the component 1 to the operation 1 is not limited in this embodiment of this application.

It can be learned from the foregoing method that, when a component that needs to be used by the user does not respond to a user operation, the electronic device 100 may enable, by redrawing the component that needs to be used by the user, the component to quickly recover to respond, so as to quickly resolve the screen freezing problem and reduce a waiting time of the user. In addition, the method can reduce a case in which the electronic device 100 restarts an application to resolve a screen freezing problem, and save resources of the electronic device.

The following describes a method for detecting and processing screen freezing based on instrumentation provided in an embodiment of this application.

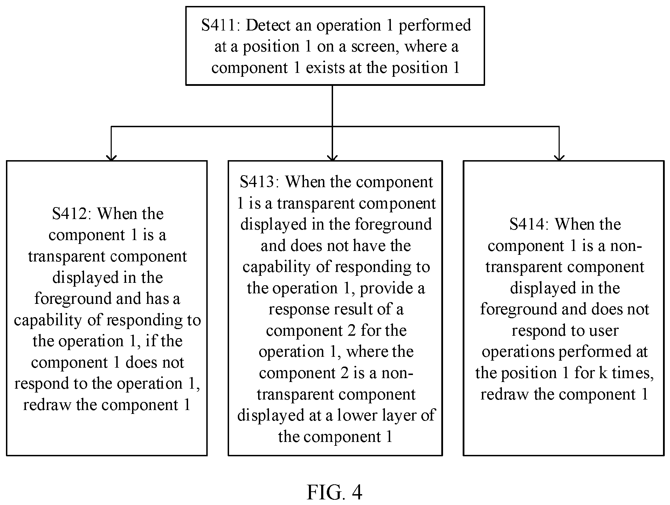

FIG. 4 is an example flowchart of a screen freezing processing method according to an embodiment of this application.

S411: Detect an operation 1 performed at a position 1 on a screen, where a component 1 exists at the position 1.

For step S411, refer to step S311 shown in FIG. 3.

In some embodiments, the electronic device 100 may perform one or more of the following detection on the component 1: detecting whether the component 1 is displayed in the foreground, detecting whether the component 1 is displayed as a transparent component, detecting whether the component 1 has a capability of responding to the operation 1, and detecting whether the component 1 responds to the operation 1. The detection method is not limited in this embodiment of this application. For example, the electronic device 100 may implement one or more of the foregoing detection through instrumentation detection. It can be learned from the embodiment in FIG. 2 that the electronic device 100 may obtain instrumentation detection information of the component 1 through detection by using the UI framework detection module, the window manager instrumentation detection module, and a component instrumentation detection module of the component 1. The instrumentation detection information of the component 1 may include component display information of the component 1 (for example, a component ID of the component 1, transparency of the component 1, and a child component included in the component 1), component operation information of the component 1 (for example, whether the component 1 has a capability of responding to the operation 1, and whether the component 1 responds to the operation 1), and window management information of a window to which the component 1 belongs (for example, a display level of the window to which the component 1 belongs).

One or more types of detection performed on the component 1 may be performed by a screen freezing detection module in the electronic device 100. If the component 1 is a transparent component displayed in the foreground and has the capability of responding to the operation 1, or the component 1 is a non-transparent component displayed in the foreground and does not respond to user operations performed at the position 1 for k times, the screen freezing detection module may send a screen freezing detection result to the window manager in the electronic device 100. The screen freezing detection result may indicate that an exception exists on the component 1. The window manager may send a component redrawing notification to the desktop service based on the screen freezing detection result. The component redrawing notification may include the component ID of the component 1. When receiving the component redrawing notification, the desktop service may redraw the component 1.

Based on a detection result of the one or more types of detection performed on the component 1, the electronic device 100 may perform step S412, step S413, or step S414.

S412: When the component 1 is a transparent component displayed in the foreground and has a capability of responding to the operation 1, if the component 1 does not respond to the operation 1, redraw the component 1.

The electronic device 100 may determine, based on the instrumentation detection information of the component 1, whether the component 1 is a transparent component displayed in the foreground.

Specifically, the electronic device 100 may determine, based on the display level of the window to which the component 1 belongs, whether the window is displayed in the foreground. If the window to which the component 1 belongs is displayed in the foreground, the electronic device 100 may determine that the component 1 is displayed in the foreground.

The electronic device 100 may determine, based on the transparency of the component 1, whether the component 1 is a transparent component. For example, if the transparency of the component 1 is within a preset range, the electronic device 100 may determine that the component 1 is a transparent component. The preset range may be a preset range close to 0. For example, the preset range may be a value range greater than or equal to 0 and less than or equal to 0.1.

In some embodiments, if the component 1 is a transparent component displayed in the foreground, the electronic device 100 may determine whether the component 1 has a capability of responding to the operation 1. Optionally, the electronic device 100 may determine, based on the instrumentation detection information of the component 1 (for example, component operation information), whether the component 1 has the capability of responding to the operation 1.

If the component 1 has the capability of responding to the operation 1, the component 1 should be visible to a user when an interface is normally loaded, so that the user can operate the component 1. However, if the component 1 is a transparent component displayed in the foreground and the component 1 has the capability of responding to the operation 1, an exception may occur on the component 1 during drawing, and consequently the component 1 is invisible to the user. In addition, although the component 1 has the capability of responding to the operation 1, the component 1 usually does not respond to the operation 1 in a transparent display state.

Therefore, when the component 1 is a transparent component displayed in the foreground and has the capability of responding to the operation 1, if the component 1 does not respond to the operation 1, the electronic device 100 may redraw the component 1. Because the foregoing interface loading exception that causes the component 1 to be drawn as a transparent component usually occurs only once, no exception may exist when the electronic device 100 redraws the component 1. In this case, there is a high probability that the electronic device 100 may display the component 1 as a non-transparent component when redrawing the component 1, so that the component 1 quickly recovers to respond to the operation 1.

In some embodiments, when the component 1 is a transparent component displayed in the foreground and has the capability of responding to the operation 1, if the component 1 does not respond to the operation 1, the electronic device 100 may redraw all the components of the window to which the component 1 belongs. In this way, the electronic device 100 can redraw, in a timely manner after screen freezing occurs, a window that a user wants to open, thereby reducing a time for waiting for the component to respond to the user operation when the user wants to open another component.

If the component 1 does not have the capability of responding to the operation 1, the electronic device 100 may perform the following step S413.

S413: When the component 1 is a transparent component displayed in the foreground and does not have the capability of responding to the operation 1, provide a response result of a component 2 for the operation 1, where the component 2 is a non-transparent component displayed at a lower layer of the component 1.

In some embodiments, if the component 1 is a transparent component displayed in the foreground and does not have the capability of responding to the operation 1, the electronic device 100 may detect a component displayed at the lower layer of the component 1.

If the component 2 is a non-transparent component displayed at the lower layer of the component 1 and can respond to the operation 1, the electronic device 100 may transparently transmit a user operation event corresponding to the operation 1 to the component 2. The component 2 may respond to the operation 1 based on the user operation event corresponding to the operation 1. In this way, the electronic device 100 may provide the response result of the component 2 to the operation 1.

It may be understood that, when the component 1 is displayed in a transparent state in the foreground, the user cannot see the component 1, but can see a component displayed at the lower layer of the component 1, for example, the component 2. Because the component 1 does not have the capability of responding to the operation 1, the electronic device 100 may determine that the operation 1 of the user at the position 1 is a user operation on the component 2. That is, even if the component 2 is covered by a transparent component (for example, the component 1), the component 2 may still respond to the user operation when the transparent component does not have the capability of responding to the user operation. In this way, user experience can be improved.

S414: When the component 1 is a non-transparent component displayed in the foreground and does not respond to user operations performed at the position 1 for k times, redraw the component 1.

It can be learned from the foregoing step S412 that the electronic device 100 may detect whether the component 1 is a transparent component displayed in the foreground. If the component 1 is not a transparent component displayed in the foreground, the component 1 may be a non-transparent component displayed in the foreground, or a component not displayed in the foreground.

An operation (such as the operation 1) performed on the screen is usually responded by a component displayed in the foreground. If the component 1 is a component not displayed in the foreground, that the component 1 does not respond to the user operation cannot indicate that screen freezing occurs on the electronic device 100. Therefore, the electronic device 100 may not need to consider a case in which the component 1 is not displayed in the foreground.

In some embodiments, the electronic device 100 may further determine, based on the instrumentation detection information of the component 1, whether the component 1 does not respond to user operations performed at the position 1 for k times, where k may be a preset positive integer. A value of k is not limited in embodiments of this application. For example, k may be a value such as 4 or 5. The k user operations performed at the position 1 are k user operations performed on the component 1. The k user operations on the component 1 are all user operations that the component 1 can respond to.

When k is a positive integer greater than 1, the electronic device 100 may redraw the component 1 after detecting that a non-transparent component displayed in the foreground does not respond to the user operation for a plurality of consecutive times. It may be understood that one or more components displayed on the screen may take a specific time to respond to a user operation. If k is 1, the electronic device 100 redraws the component when detecting only once that the component does not respond to the user operation within a preset time. However, the component may actually respond to the user operation, but a response speed is slow. In this case, the component redrawing causes a waste of resources of the electronic device 100. Therefore, setting k to a positive integer greater than 1 can reduce a case in which the electronic device 100 redraws a non-abnormal component, and reduce a waste of resources of the electronic device 100.

In some embodiments, each time the user performs a user operation at the position 1, the UI framework instrumentation detection module in the electronic device 100 may detect whether the component 1 responds to the user operation.

When the component 1 is a non-transparent component displayed in the foreground, and does not respond to user operations performed at the position 1 for k times, the electronic device 100 may redraw the component 1.

In some embodiments, if the redrawn component 1 still does not respond to a user operation performed on the component 1, the electronic device 100 may restart an application associated with the component 1 to resolve a screen freezing problem.

It may be understood that the component 1 is displayed in the foreground and is visible to the user. If the user urgently needs to use the component 1, the user usually performs a user operation on the component 1 for a plurality of times in a short time. For example, if the user does not obtain a corresponding user interaction feedback after tapping the component 1 once, the user may tap the component 1 for a plurality of times to obtain the corresponding user interaction feedback. In consideration of urgency of using the component 1 by the user, the electronic device 100 may first process a screen freezing problem by redrawing the component 1. If the redrawn component 1 can respond in time to the user operation performed on the component 1, the electronic device 100 may provide a response result of the component 1 to the user operation, so that the application associated with the component 1 does not need to be restarted. In this way, the electronic device 100 can resolve the screen freezing problem at minimum costs, so that a component that needs to be used by the user quickly recovers to respond, and a waiting time of the user is reduced.

It should be noted that, if the component 1 is a non-transparent component displayed in the foreground, and there is no k times that the component 1 does not respond to a user operation performed at the position 1, the electronic device 100 may not need to redraw the component 1. That there is no k times that the component 1 does not respond to a user operation performed at the position 1 may include the following two cases:
Case 1: The component 1 responds to the user operation before the user operation is performed at the position 1 for a k^{th} time.

For example, if the component 1 is a non-transparent component displayed in the foreground and responds to an m1^{th} user operation performed at the position 1, the electronic device 100 may provide a response result of the component 1 to the m1^{th} user operation, and does not need to redraw the component 1. m1 is a positive integer less than k.

Case 2: A quantity of user operations performed at the position 1 does not reach k, and the component 1 does not respond to a plurality of user operations performed at the position 1.

For example, when the component 1 is a non-transparent component displayed in the foreground, if the electronic device 100 detects only m2 user operations performed at the position 1, and the component 1 does not respond to the m2 user operations, the electronic device 100 may not need to redraw the component 1, where m2 is a positive integer less than k. It may be understood that, after the user performs user operations on the component 1 for m2 times and finds that no user interaction feedback is obtained, the user does not continue to perform a user operation on the component 1. This may indicate that the user does not have an urgent need to use the component 1. When the component 1 has an exception and does not respond to a user operation, if the user does not urgently need to use the component 1, the electronic device 100 may not redraw the component 1, so as to save resources of the electronic device 100.

It can be learned from the method that, if the component 1 is a transparent component displayed in the foreground and has the capability of responding to the operation 1, or the component 1 is a non-transparent component displayed in the foreground and does not respond to user operations for k times, the electronic device 100 may redraw the component 1 to process an exception on the component 1. In this way, the component 1 can quickly recover to respond, and a waiting time of the user is reduced. In addition, the method can reduce a case in which the electronic device 100 restarts the application associated with the component 1 to resolve the screen freezing problem, and save resources of the electronic device 100.

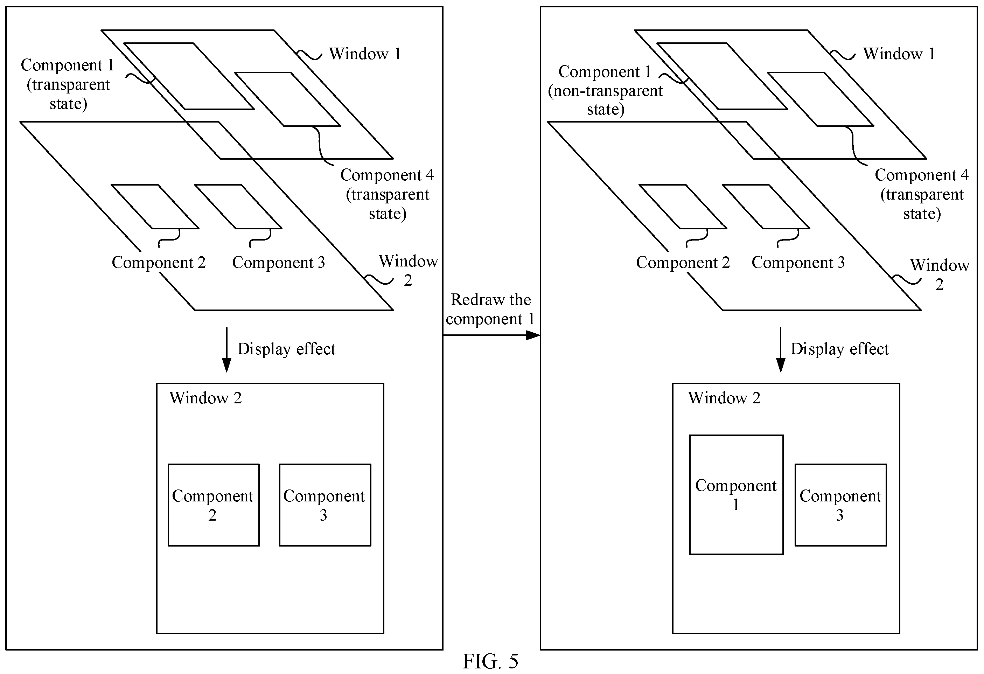

**FIG. 5** **is a diagram of redrawing a component according to an embodiment of this application.**

As shown in FIG. 5, an electronic device 100 may draw a window 1 and a window 2. Display levels of the window 1 and the window 2 may be different. In some embodiments, the window 1 and the window 2 may be windows of different applications.

The window 1 may be a window displayed in the foreground. The window 1 may include a component 1 and a component 4. Display statuses of the component 1 and a component 2 are transparent states. That is, both the component 1 and the component 4 are transparent components displayed in the foreground. The window 2 may be a window displayed at a lower layer of the window 1. The window 2 may include the component 2 and a component 3. Both the component 2 and the component 3 are non-transparent components. Display effects of the window 1 and the window 2 on a screen may be that the window 2 is visible to a user, and the window 1 is invisible to the user. In other words, after the electronic device 100 draws the window 1 and the window 2, the user may see the components (for example, the component 2 and the component 3) in the window 2 on the screen, but cannot see the components (for example, the component 1 and the component 4) in the window 1.

In some embodiments, the component 1 is located at a position 1 on the screen. In response to an operation 1 performed at the position 1, the electronic device 100 may detect whether screen freezing occurs on the electronic device 100. If it is determined that screen freezing occurs on the electronic device 100, the electronic device 100 may redraw the component 1.

Specifically, the electronic device 100 may obtain instrumentation detection information of the component 1, and detect, based on the instrumentation detection information of the component 1, whether screen freezing occurs on the electronic device 100. Cases in which screen freezing occurs on the electronic device 100 may include: case 1: The component 1 is a transparent component displayed in the foreground and has a capability of responding to the operation 1; and case 2: The component 1 is a non-transparent component displayed in the foreground and does not respond to user operations performed at the position 1 for k times. The electronic device 100 may detect whether the component 1 meets the foregoing case 1 or case 2. For details, refer to steps S412 to S414 shown in FIG. 4. If the component 1 meets the foregoing case 1 or case 2, the electronic device 100 may redraw the component 1.

As shown in FIG. 5, before the component 1 is redrawn, the component 1 is a transparent component displayed in the foreground. In response to the operation 1 performed at the position 1, if the component 1 has the capability of responding to the operation 1, the electronic device 100 may redraw the component 1. Because the foregoing interface loading exception that causes the component 1 to be drawn as a transparent component usually occurs only once, no exception may exist when the electronic device 100 redraws the component 1.

As shown in FIG. 5, after redrawing, the display status of the component 1 may change from a transparent state to a non-transparent component. That is, after the electronic device 100 redraws the component 1, the component 1 may become a non-transparent component displayed in the foreground.

Because the operation 1 is performed at the display position 1 of the component 1, the electronic device 100 may redraw only the component 1, and does not need to redraw another component (for example, the component 4) in the window 1. After the component 1 is redrawn, the display status of the component 4 may still be a transparent state. It may be understood that because the user does not perform a user operation on the component 4, the component 4 is a component that does not need to be used by the user temporarily, and the electronic device 100 does not need to waste resources to draw the component 4. This not only saves resources of the electronic device 100, but also reduces a time required to redraw the component.

After the component 1 is redrawn, the display effects of the window 1 and the window 2 on the screen may be as follows: The component 1 in the window 1 is visible to the user, some content in the window 2 is shielded by the component 1, but remaining content that is not shielded by the component 1 is still visible to the user. For example, the component 2 in the window 2 is a component displayed at the lower layer of the component 1. When the component 1 is a non-transparent component, the component 2 is shielded by the component 1. The component 3 in the window 2 is not shielded by the component 1. Therefore, after the component 1 is redrawn, the component 2 is invisible to the user, and the component 3 is still visible to the user.

If the component 1 has the capability of responding to the user operation, the component 1 should be visible to the user so that the user can operate the component 1. Before the component 1 is redrawn, the component 1 is transparently displayed due to a drawing exception, and does not respond to the operation 1 in the case of having the capability of responding to the operation 1. In other words, the transparent component causes screen freezing of the electronic device 100. The electronic device 100 redraws the component 1, so that the component 1 can be recovered to a non-transparent component, and quickly recover to respond to the operation 1. In this way, the electronic device 100 can implement quick screen freezing recovery by redrawing a component that needs to be used by the user after screen freezing occurs, thereby reducing a time for the user to wait for the component to respond to a user operation.

In some embodiments, in response to the operation 1 performed at the position 1, if the component 1 is a transparent component displayed in the foreground and does not have the capability of responding to the operation 1, the electronic device 100 may transparently transmit a user operation event corresponding to the operation 1 to the component 2, and the component 1 does not need to be redrawn. The component 2 may respond to the operation 1 based on the user operation event corresponding to the operation 1. In this way, the electronic device 100 may provide a response result of the component 2 to the operation 1.

In some embodiments, before the component 1 is redrawn, the display status of the component 1 is a non-transparent state. In response to the operation 1 performed at the position 1, if the component 1 has the capability of responding to the operation 1, the electronic device 100 may detect whether the component 1 responds to the operation 1. If the component 1 does not respond to user operations performed at the position 1 for k times, the electronic device 100 may redraw the component 1. When the electronic device 100 redraws the component 1, there may be no exception, so that the component 1 quickly recovers to respond. In other words, the component 1 is visible to the user before and after the component 1 is redrawn, but the component 1 can respond to the operation 1 after the component 1 is redrawn. It can be learned that if the electronic device 100 can enable, by redrawing the component 1, the component 1 to recover to respond, an application associated with the component 1 does not need to be restarted. In this way, the electronic device 100 can resolve the screen freezing problem at minimum costs, so that a component that needs to be used by the user quickly recovers to respond, and a waiting time of the user is reduced.

In some embodiments, in response to the operation 1 performed at the position 1 of the component 1, the electronic device 100 may redraw all components included in the window 1. In this way, the electronic device 100 can redraw, in a timely manner after screen freezing occurs, a window that a user wants to open, thereby reducing a time for waiting for the component to respond to the user operation when the user wants to open another component.

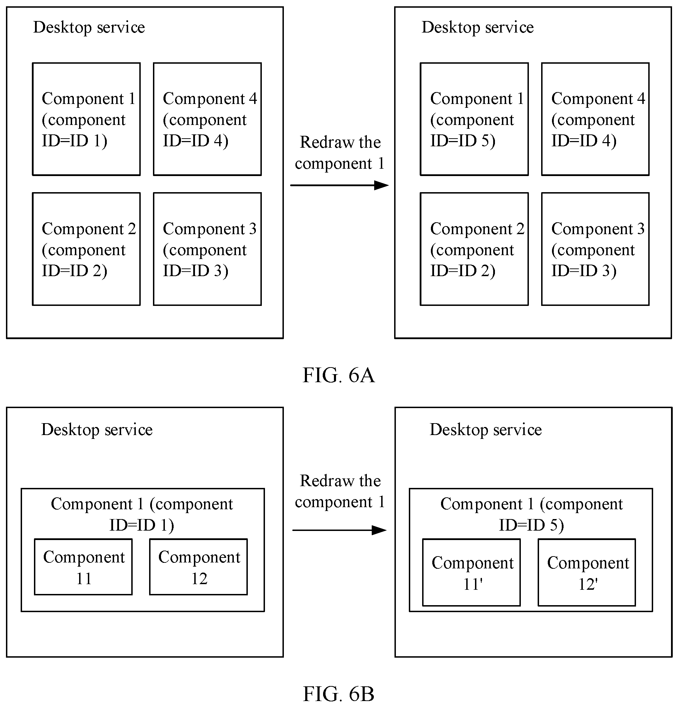

**FIG. 6A and FIG. 6B** **are some other diagrams of redrawing a component according to this application.**

In some embodiments, an electronic device 100 redraws a component displayed on a screen, and may adjust a component ID of the component. That is, the component ID changes before and after the redrawing.

As shown in FIG. 6A, components displayed on the screen of the electronic device 100 may include a component 1, a component 2, a component 3, and a component 4. The component 1 to the component 4 may include a transparent component and/or a non-transparent component, and may be components of a same application or different applications. The components are not limited to the component 1 to the component 4, and more or fewer components may be displayed on the screen. The following uses the component 1 to the component 4 as an example.

For example, a component ID of the component 1 may be an ID 1. A component ID of the component 2 may be an ID 2. A component ID of the component 3 may be an ID 3. A component ID of the component 4 may be an ID 4. If the component 1 needs to be redrawn, a desktop service may redraw the component 1 and adjust the component ID of the component 1. For example, the component ID of the redrawn component 1 is an ID 5. Optionally, the desktop service may determine, based on a component ID of a component currently existing on the screen, the component ID obtained after the component 1 is redrawn. The component ID obtained after the component 1 is redrawn may be used to uniquely identify the component 1 on the screen. The foregoing process of redrawing the component 1 may be equivalent to destroying the component 1 whose component ID is the ID 1 and drawing the component 1 whose component ID is the ID 5.

For a method for determining whether the component 1 needs to be redrawn, refer to the description in FIG. 4.

As shown in FIG. 6A, because the component 2 to the component 4 are not redrawn, the component IDs of the component 2 to the component 4 may remain unchanged before and after the component 1 is redrawn.

The adjusting the ID of the component when the component 1 is redrawn may effectively indicate that the electronic device 100 performs a redrawing operation on the component 1.

Optionally, when the electronic device 100 redraws the component 1, the component ID of the component 1 may alternatively remain unchanged before and after the redrawing.

In some embodiments, the component 1 includes one or more child components. When redrawing the component 1, the electronic device 100 may further redraw the child component included in the component 1.

As shown in FIG. 6B, the component ID of the component 1 is the ID 1. The child components of the component 1 may include a component 11 and a component 12. Not limited to the component 11 and the component 12, the component 1 may further include more or fewer child components.

If the component 1 needs to be redrawn, the desktop service may redraw the component 1, the component 11, and the component 12. A component 11' may be a redrawn component 11. A component 12' may be a redrawn component 12. After the component 1 is redrawn, the component ID of the component 1 may change. For example, the component ID of the component 1 changes from the ID 1 to the ID 5. The component 11 and the component 12 also have responding component IDs. When the component 11 and the component 12 are redrawn with the component 1, the component IDs of the component 11 and the component 12 may also change. That is, a component ID of the component 11' may be different from the component ID of the component 11. A component ID of the component 12' may be different from the component ID of the component 12. The component IDs of the component 11' and the component 12' are not limited in this embodiment of this application.

It may be understood that a child component included in a component is usually displayed in a region for displaying the component. That is, a display position of a child component usually does not exceed a boundary of content presented by a parent component. Content presented by the child component may be equivalent to a part of content that is redrawn when the parent component is redrawn. Therefore, when redrawing a component, the electronic device may redraw a child component included in the component.

In some embodiments, screen freezing of the electronic device 100 may be caused by memory leakage. The electronic device 100 may detect memory leakage, and manage a process in the electronic device 100 based on a memory leakage amount and a currently available memory amount in the electronic device 100. In this way, screen freezing caused by memory leakage can be prevented, and a screen freezing problem can be quickly resolved when screen freezing occurs on the electronic device 100.

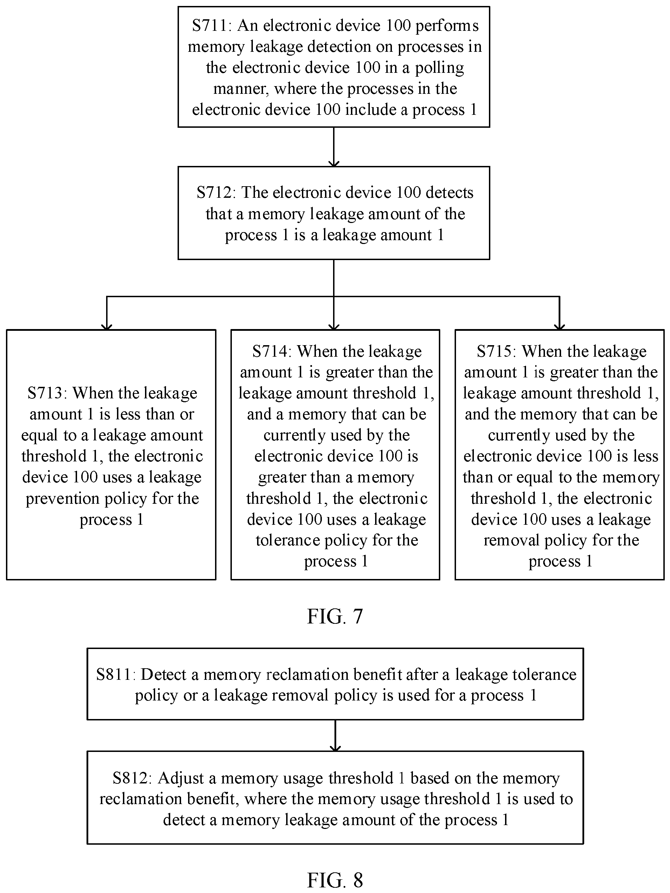

FIG. 7 is an example flowchart of a method for processing memory leakage according to an embodiment of this application.

S711: An electronic device 100 performs memory leakage detection on processes in the electronic device 100 in a polling manner, where the processes in the electronic device 100 include a process 1.

In some embodiments, the electronic device 100 may run a plurality of processes. The electronic device 100 performs memory leakage detection on the plurality of processes in turn and cyclically. A sequence in which memory leakage detection is performed in turn is not limited in this embodiment of this application. Optionally, the electronic device 100 may select a process at an interval of a preset time period for memory leakage detection. Duration of the preset time period is not limited in this embodiment of this application.

Herein, an example in which the electronic device 100 performs memory leakage detection on the process 1 and manages the process 1 is specifically used for description. The process 1 may be a process of any application.

S712: The electronic device 100 detects that a memory leakage amount of the process 1 is a leakage amount 1.

In some embodiments, the electronic device 100 may store memory usage thresholds corresponding to different processes. A memory usage threshold corresponding to a process may be used to detect a memory leakage amount of the process. A memory usage threshold corresponding to a process may reflect a peak value of a memory occupied by the process when no memory leakage occurs or only a small amount of memory leakage occurs. A memory usage threshold corresponding to a process may be determined based on a memory amount occupied by the process in a running process. A method for determining a memory usage threshold corresponding to a process is not limited in this embodiment of this application.

Memory usage thresholds corresponding to different processes may be different. For example, a memory usage threshold corresponding to the process 1 may be a memory usage threshold 1.

The electronic device 100 may obtain a memory amount occupied by the process 1. The electronic device 100 may determine a memory leakage amount of the process 1 by comparing the memory amount occupied by the process 1 with the memory usage threshold corresponding to the process 1. For example, if the memory amount occupied by the process 1 is less than or equal to the memory usage threshold 1, the electronic device 100 may determine that no memory leakage occurs in the process 1. If the memory amount occupied by the process 1 is greater than the memory usage threshold 1, the electronic device 100 may determine that memory leakage exists in the process 1, and a memory leakage amount is a leakage amount 1. The leakage amount 1 may be a value obtained by subtracting the memory usage threshold 1 from the memory amount occupied by the process 1.

In some embodiments, step S712 may be performed by a memory leakage detection module in the electronic device 100. The memory leakage detection module may send the leakage amount 1 to a memory management module in the electronic device 100.

The foregoing embodiment is merely an example for description of detecting a memory leakage amount of a process provided in this application, and should not constitute a limitation on this application. The electronic device 100 may alternatively detect the memory leakage amount of the process by using another method.

Based on a value of the leakage amount 1, the electronic device 100 may perform step S713, step S714, or step S715.

S713: When the leakage amount 1 is less than or equal to a leakage amount threshold 1, the electronic device 100 uses a leakage prevention policy for the process 1.

In some embodiments, the electronic device 100 determines whether the leakage amount 1 is greater than the leakage amount threshold 1. The leakage amount threshold 1 may be preset. A value of the leakage amount threshold 1 is not limited in this embodiment of this application. For example, the leakage amount threshold 1 may be 200 MB.

Alternatively, the leakage amount threshold 1 may be determined based on the memory usage threshold 1. For example, the leakage amount threshold 1 may be 1/2 of the memory usage threshold 1.

In some embodiments, the leakage prevention policy may include but is not limited to: forbidding a new thread to be created in the background, forbidding association with or binding to a service in the background, no longer allocating a new memory to a process, periodically performing memory leakage detection on a process, and the like. The association with or binding to a service in the background may be used to implement communication and interaction between a background service in the process and another component.

It can be learned that the leakage prevention policy is mainly used to prevent a memory leakage amount of a process from further increasing without affecting process running as much as possible. The leakage prevention policy may also be referred to as another name.

If the leakage prevention policy is used for the process 1, the electronic device 100 not only performs memory leakage detection on the process 1 according to the sequence of polling detection in step S711, but also needs to perform memory leakage detection on the process 1 according to a preset period. In this way, after the memory leakage amount of the process 1 changes, the electronic device 100 may adjust a management policy for the process 1 in time based on the change of the memory leakage amount of the process 1.

It may be understood that, if the leakage amount 1 is less than or equal to the leakage amount threshold 1, it may indicate that a current memory leakage amount of the process 1 is small, and causes small impact and harm in the electronic device 100. Therefore, the electronic device 100 may use the leakage prevention policy for the process 1. This can reduce impact on running of the process 1, so as to avoid affecting use of an application corresponding to the process 1 by the user, and can prevent an increase in the memory leakage amount of the process 1, thereby reducing a case in which screen freezing occurs on the electronic device 100 due to memory leakage.

S714: When the leakage amount 1 is greater than the leakage amount threshold 1, and a memory that can be currently used by the electronic device 100 is greater than a memory threshold 1, the electronic device 100 uses a leakage tolerance policy for the process 1.

In some embodiments, when the leakage amount 1 is greater than the leakage amount threshold 1, the electronic device 100 may further determine whether the memory that can be currently used by the electronic device 100 is greater than the memory threshold 1. The memory that can be currently used by the electronic device 100 may be a memory that has not been allocated in the electronic device 100, that is, an available memory.

The memory threshold 1 may be preset. A value of the memory threshold 1 is not limited in this embodiment of this application. For example, the memory threshold 1 may be 1 GB.

In some embodiments, the leakage tolerance policy may include but is not limited to: garbage collection (garbage collection, GC), thread local caching (thread local caching, tcache), memory compression, memory reclamation, and the like. GC may mean that when a part of a memory space occupied by an application is no longer accessed by the program, the application may return the part of the memory space by using a garbage collection algorithm. One process may include one or more threads. Each thread may have its own cache. The caching tcache may indicate clearing a cache of one or more threads in a process, and reclaiming a memory space occupied by the cleared cache. The memory compression may be performed in a manner such as a zip random access memory (zip random access memory, zRAM) technology.

It can be learned that, in the leakage tolerance policy, a part of memory occupied by a process is mainly reclaimed, so as to reduce a memory leakage amount of the process. The leakage tolerance policy may also be referred to as another name. Impact of using the leakage tolerance policy for the process 1 on running of the process 1 is greater than impact of using the leakage prevention policy for the process 1 on running of the process 1.

It may be understood that, if the leakage amount 1 is greater than the leakage amount threshold 1, it may indicate that a current memory leakage amount of the process 1 is large. If a memory that can be currently used by the electronic device 100 is greater than the memory threshold 1, it may indicate that a currently available memory of the electronic device 100 is sufficient. When the memory leakage amount of the process 1 is large, but the currently available memory of the electronic device 100 is sufficient, the electronic device 100 can basically bear impact caused by memory leakage of the process 1. Therefore, the electronic device 100 may use the leakage tolerance policy for the process 1. This can reduce impact on running of the process 1 as much as possible while reducing memory leakage of the process 1, thereby reducing impact on using the application corresponding to the process 1 by the user.

S715: When the leakage amount 1 is greater than the leakage amount threshold 1, and the memory that can be currently used by the electronic device 100 is less than or equal to the memory threshold 1, the electronic device 100 uses a leakage removal policy for the process 1.

In some embodiments, the leakage removal policy may include but is not limited to: clearing a foreground process and providing a process clearing prompt, clearing a foreground associated process when a screen of the electronic device 100 is turned off, preferentially sorting and clearing a non-resident process and a non-foreground dependent process, and killing a background process for reclamation.

Herein, the leakage removal policy is described by using an example in which the electronic device 100 uses the leakage removal policy for the process 1. The clearing a foreground process and providing a process clearing prompt may indicate that when the screen of the electronic device 100 is turned on, if the process 1 is a foreground process, the electronic device 100 may provide a prompt of clearing the process 1. In this way, the electronic device 100 may determine, based on a selection of the user, whether to clear the process 1. For example, in response to an operation of choosing not to clear the process 1 by the user, the electronic device 100 may keep the process 1 running, so as to affect use experience of the user. The killing a background process for reclamation may indicate that: when the screen of the electronic device 100 is turned on, if the process 1 is a background process, the electronic device 100 may clear the process 1 (that is, terminate running of the process 1) and reclaim a memory of the process 1. The clearing a foreground associated process when the screen of the electronic device 100 is turned off may indicate that the electronic device 100 may clear the process 1 when the screen of the electronic device 100 is turned off. The preferentially sorting and clearing a non-resident process and a non-foreground dependent process may indicate that the electronic device 100 may determine whether the process 1 is a process on which running of a foreground process depends, or a non-resident process. If the process 1 is a non-foreground dependent process and a non-resident process, the electronic device 100 may clear the process 1. If the process 1 is a process on which running of a foreground process depends, the electronic device 100 may clear the process 1 after the process 1 becomes a non-foreground dependent process, or provide a prompt of clearing the process 1, so that the user chooses whether to clear the process 1. If the process 1 is a resident process, the electronic device 100 may keep the process 1 running.

It can be learned that, using leakage removal on the process 1 can make the process 1 stop running. After running of the process 1 is stopped, the entire memory occupied by the process 1 is reclaimed. In this way, memory leakage of the process 1 is eliminated naturally when the process 1 stops running. In other words, the leakage removal policy mainly eliminates memory leakage of a process by ending the process. The leakage removal policy may also be referred to as another name.

It may be understood that, if the leakage amount 1 is greater than the leakage amount threshold 1, it may indicate that a current memory leakage amount of the process 1 is large. If a memory that can be currently used by the electronic device 100 is less than or equal to the memory threshold 1, it may indicate that a currently available memory of the electronic device 100 is insufficient. In this case, if a process in the electronic device 100 needs to apply for a new memory, memory overflow may occur in the electronic device 100. The electronic device 100 may freeze when running a program, and therefore screen freezing may likely occur. Therefore, the electronic device 100 may use the leakage removal policy for the process 1. In this way, memory leakage of the process 1 can be eliminated, and a case in which screen freezing occurs on the electronic device 100 due to memory leakage can be reduced. In addition, if screen freezing caused by memory leakage occurs in the electronic device 100, the electronic device 100 may eliminate memory leakage of one or more processes by using the leakage removal policy, so that an available memory of the electronic device 100 increases. The screen freezing problem can be resolved as the available memory of the electronic device 100 increases.

In some embodiments, the determining whether the leakage amount 1 is greater than the leakage threshold 1 and determining whether the memory that can be currently used by the electronic device 100 is greater than the memory threshold 1 may be performed by the memory management module in the electronic device 100. The leakage prevention policy, the leakage tolerance policy, or the leakage removal policy used for the process 1 may be performed by a process management module in the electronic device 100. The memory management module may send a process management policy (for example, the leakage prevention policy, the leakage tolerance policy, or the leakage removal policy) for the process 1 to the process management module.

It can be learned from the foregoing method that the electronic device 100 may manage a process when memory leakage occurs in the process. The electronic device 100 may determine, based on a memory leakage amount of a process and an available memory in the electronic device 100, to use the leakage prevention policy, the leakage tolerance policy, or the leakage removal policy for the process. In this way, screen freezing caused by memory leakage can be reduced, and impact of process management on process running can be minimized, thereby improving user experience.

In some embodiments, when the leakage tolerance policy or the leakage removal policy is used for a process, the electronic device 100 may reclaim a part of memory occupied by the process. The electronic device 100 may adjust, based on a memory reclamation benefit, a memory usage threshold corresponding to the process. An adjusted memory usage threshold may more accurately reflect a peak value of a memory occupied by the process when no memory leakage occurs or only a small amount of memory leakage occurs.

**FIG. 8** **is an example flowchart of a method for adjusting a memory usage threshold according to an embodiment of this application.**

S811: An electronic device 100 detects a memory reclamation benefit after using a leakage tolerance policy or a leakage removal policy for a process 1.

When the leakage tolerance policy or the leakage removal policy is used for the process 1, the electronic device 100 may determine an estimated memory reclamation amount of the process 1. The estimated memory reclamation amount may indicate an estimated memory amount to be reclaimed from a memory occupied by the process 1 when memory leakage occurs in the process.

In some embodiments, the estimated memory reclamation amount may be determined based on a memory usage threshold currently corresponding to the process 1 and a memory amount currently occupied by the process. The estimated memory reclamation amount of the process 1 may be a value obtained by subtracting a memory usage threshold currently corresponding to the process 1 from a memory amount currently occupied by the process 1, that is, a memory leakage amount of the process 1 that is determined based on the memory usage threshold currently corresponding to the process 1. For example, the memory usage threshold currently corresponding to the process 1 is 2 GB. The memory amount currently occupied by the process 1 is 4 GB. The electronic device 100 may determine that the memory leakage amount of the process 1 and the estimated memory reclamation amount are 2 GB.

Alternatively, the estimated memory reclamation amount may be determined based on the memory usage threshold currently corresponding to the process, the memory amount currently occupied by the process, and a leakage amount threshold of the process. The estimated memory reclamation amount may be a value obtained by subtracting the memory amount currently occupied by the process and subtracting the leakage amount threshold of the process from the currently corresponding memory usage threshold. For example, the memory usage threshold currently corresponding to the process 1 is 2 GB. The memory amount currently occupied by the process 1 is 4 GB. The memory leakage amount threshold of the process 1 is 0.5 GB. The electronic device 100 may determine that the memory leakage amount of the process 1 is 2 GB, and the estimated memory reclamation amount is 1.5 GB.

The electronic device 100 may further detect an actual memory reclamation amount obtained after the leakage tolerance policy or the leakage removal policy is used for the process 1. The actual memory reclamation amount may be a memory amount actually reclaimed from the memory occupied by the process 1, that is, an increment in an available memory of the entire device after the memory of the process 1 is reclaimed.

The electronic device 100 may determine the memory reclamation benefit based on the estimated memory reclamation amount and the actual memory reclamation amount. The memory reclamation benefit may be a value obtained by subtracting the actual memory reclamation amount from the estimated memory reclamation amount. For example, the estimated memory reclamation amount is 2 GB. The actual memory reclamation amount is 1 GB. Then, the memory reclamation benefit is 1 GB.

It may be understood that, because the memory usage threshold corresponding to the process 1 is an estimated value of a peak value of the memory occupied by the process 1 when no memory leakage occurs or only a small amount of memory leakage occurs, the memory leakage amount determined by the electronic device 100 based on the memory usage threshold is actually a memory amount of memory leakage. In other words, the memory leakage amount of the process 1 that is determined by the electronic device 100 is usually greater than an actual memory leakage amount of the process 1. In addition, it is difficult for the electronic device 100 to reclaim all the memory occupied by memory leakage when reclaiming the memory of the process 1. Therefore, the actual memory reclamation amount is usually less than the estimated memory reclamation amount.

S812: The electronic device 100 may adjust a memory usage threshold 1 based on the memory reclamation benefit, where the memory usage threshold 1 is used to detect a memory leakage amount of the process 1.

In some embodiments, the electronic device 100 may obtain a new memory usage threshold by adding the memory reclamation benefit to the memory usage threshold currently corresponding to the process 1. For example, the memory usage threshold corresponding to the process 1 is the memory usage threshold 1. Before the memory usage threshold 1 is adjusted, the memory usage threshold 1 is 2 GB. If the memory reclamation benefit is 1 GB, after the electronic device 100 adjusts the memory usage threshold 1 based on the memory reclamation benefit, the memory usage threshold 1 is 3 GB. The electronic device 100 may perform memory leakage detection on the process 1 by using the adjusted memory usage threshold 1.

In some embodiments, a process management module in the electronic device 100 may manage the process 1, and reclaim the memory of the process 1. A memory management module in the electronic device 100 may determine the actual memory reclamation amount of the process 1, and send the actual memory reclamation amount of the process 1 to a memory leakage detection module of the electronic device 100. Then, the memory leakage detection module may perform step S812 based on the actual memory reclamation amount of the process 1.

It can be learned from the method that, when memory leakage occurs in the process 1, the electronic device 100 may dynamically adjust, based on a result of memory reclamation performed on the process 1, the memory usage threshold corresponding to the process 1. In this way, the memory usage threshold corresponding to the process 1 can more accurately reflect the peak value of the memory occupied by the process 1 when no memory leakage occurs or only a small amount of memory leakage occurs, thereby improving accuracy of detecting the memory leakage amount.

An embodiment of this application further provides a computer-readable storage medium. The computer-readable storage medium stores a computer program. When the computer program is executed by a processor, steps in the foregoing method embodiments may be implemented.

An embodiment of this application further provides a computer program product, including a computer program. When the computer program is run on a processor, the steps in the foregoing method embodiments may be implemented.

An embodiment of this application further provides a chip system. The chip system includes a processing circuit and an interface circuit. The interface circuit is configured to receive code instructions and transmit the code instructions to the processing circuit. The processing circuit is configured to run the code instructions, so that the chip system implements the steps any method embodiment of this application. The chip system may be a single chip or a chip module including a plurality of chips.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A screen freezing processing method, wherein the method comprises:
displaying, by an electronic device, a first interface, wherein the first interface comprises a first component;
detecting, by the electronic device, a first operation performed on the first component; and
when the first component does not respond to the first operation, redrawing, by the electronic device, the first component; or
when the first component responds to the first operation, displaying, by the electronic device, a response result of the first component for the first operation.

2. The method according to claim 1, wherein the first component has a capability of responding to the first operation.

3. The method according to claim 1 or 2, wherein before the electronic device redraws the first component, the first component is a transparent component displayed in the foreground; and after the electronic device redraws the first component, the first component is a non-transparent component displayed in the foreground.

4. The method according to claim 1 or 2, wherein the first component is a non-transparent component displayed in the foreground.

5. The method according to claim 4, wherein the first operation comprises k second operations, k is a positive integer greater than 1, and that the first component does not respond to the first operation comprises that the first component does not respond to the second operations for k times.

6. The method according to any one of claims 1 to 5, wherein the first component comprises one or more child components, and the redrawing, by the electronic device, the first component specifically comprises:
redrawing, by the electronic device, the first component and the one or more child components.

7. The method according to any one of claims 1 to 6, wherein before the electronic device redraws the first component, a component ID of the first component is a first component ID, and after the electronic device redraws the first component, the component ID of the first component is a second component ID.

8. The method according to any one of claims 1 to 7, wherein when the first component is redrawn, another component in the first interface remains in a not redrawn state.

9. The method according to any one of claims 1 to 8, wherein after the electronic device redraws the first component, the method further comprises:
detecting, by the electronic device, a third operation performed on the first component, wherein an operation type of the third operation is the same as that of the first operation; and
in response to the third operation, performing, by the electronic device, a function corresponding to the first component or opening an interface corresponding to the first component.

10. The method according to any one of claims 1 to 8, wherein after the electronic device redraws the first component, the method further comprises:
detecting, by the electronic device, a fourth operation performed on the first component, wherein the first component has a capability of responding to the fourth operation; and
when the first component does not respond to the fourth operation, restarting, by the electronic device, a process associated with the first component.

11. The method according to any one of claims 1 to 10, wherein the first interface comprises a second component and a third component, the second component is a transparent component displayed in the foreground, the third component is a non-transparent component displayed at a lower layer of the second component, and the method further comprises:
detecting, by the electronic device, a fifth operation performed on positions of the second component and the third component, wherein the second component does not have a capability of responding to the fifth operation, and the third component has the capability of responding to the fifth operation; and
in response to the fifth operation, performing, by the electronic device, a function corresponding to the third component or opening an interface corresponding to the third component.

12. The method according to any one of claims 1 to 11, wherein a process run by the electronic device comprises a first process, and the method further comprises:
if a memory leakage amount of the first process is less than or equal to a first threshold, using, by the electronic device, a first policy for the first process, wherein the first policy comprises one or more of the following: forbidding a process to create a new thread in the background, forbidding a process to be associated with or bound to a service in the background, no longer allocating a new memory to a process, and periodically performing memory leakage detection on a process.

13. The method according to claim 12, wherein the method further comprises:
when the memory leakage amount of the first process is greater than the first threshold,
if an available memory amount of the electronic device is less than or equal to a second threshold, using, by the electronic device, a second policy for the first process, wherein the second policy comprises one or more of the following: garbage collection, thread local caching, memory compression, and memory reclamation; or
if the available memory amount of the electronic device is greater than the second threshold, using, by the electronic device, a third policy for the first process, wherein the third policy comprises one or more of the following: clearing a foreground process and providing a process clearing prompt, clearing a foreground associated process when a screen of the electronic device is turned off, preferentially sorting and clearing a non-resident process and a non-foreground dependent process, and killing a background process for reclamation.

14. The method according to claim 12 or 13, wherein the electronic device stores a first memory usage threshold, and the memory leakage amount of the first process is determined based on the first memory usage threshold and a memory amount occupied by the first process.

15. The method according to claim 14, wherein the method further comprises:
after the second policy or the third policy is used for the first process, detecting, by the electronic device, a memory reclamation benefit of the electronic device, wherein the memory reclamation benefit is determined based on an estimated memory reclamation amount and an actual memory reclamation amount of the first process; and
adjusting, by the electronic device, the first memory usage threshold based on the memory reclamation benefit.

16. An electronic device, wherein the electronic device comprises a storage and a processor, the storage is configured to store a computer program, and the processor executes the computer program to implement the method according to any one of claims 1 to 15.

17. A computing-readable storage medium, storing instructions, wherein when the instructions are executed by a processor, the method according to any one of claims 1 to 15 is implemented.

18. A computer program product, wherein the computer program product comprises computer instructions, and when the computer instructions are executed by a processor, the method according to any one of claims 1 to 15 is implemented.
